# EUROPÄISCHE PATENTSCHRIFT

(11) **EP 3 319 853 B1**
(45) Veröffentlichungstag und Bekanntmachung des Hinweises auf die Patenterteilung: **31.07.2019**
(21) Anmeldenummer: 16714749.5
(22) Anmeldetag: 20.01.2016
(51) Int. Cl.: B60W 30/04, B60R 21/0132, B60R 21/00

(54) **VERFAHREN ZUM ERKENNEN EINES ÜBERSCHLAGS EINES KRAFTFAHRZEUGS**
METHOD FOR DETECTING A ROLLOVER OF A MOTOR VEHICLE
PROCÉDÉ PERMETTANT D'IDENTIFIER UN CAPOTAGE D'UN VÉHICULE AUTOMOBILE

(30) Priorität: 15.06.2015 DE 102015210968
(43) Veröffentlichungstag der Anmeldung: 16.05.2018
(73) Patentinhaber: Continental Automotive GmbH, 30165 Hannover (DE)
(72) Erfinder: LEIRICH, Oskar, 93098 Mintraching (DE)
(74) Vertreter: Büchner, Jörg
(86) Internationale Anmeldenummer: PCT/DE2016/200023
(87) Internationale Veröffentlichungsnummer: WO 2016/202331

(56) Entgegenhaltungen:
- EP-A1- 1 312 515
- EP-A2- 1 157 899
- WO-A1-2007/033853
- DE-A1- 10 235 567
- US-A1- 2004 176 897

## Beschreibung

Die Erfindung betrifft ein Verfahren zum Erkennen eines Überschlags gemäß dem Oberbegriff von Anspruch 1.

Überschläge von Kraftfahrzeugen sind seit Jahrzehnten von besonderer Bedeutung bei der Aktivierung von Rückhaltemitteln zum Insassenschutz. Dabei kommen insbesondere Drehratensensoren zum Einsatz, welche ermöglichen, frühzeitig Drehimpulse des Kraftfahrzeugs zu erkennen und rechtzeitig Rückhaltemittel auszulösen. Schwachpunkte dabei sind dabei der im Zweifel nicht berücksichtigte Absolutwinkel um die Fahrtrichtungsachse bspw. aufgrund geneigter Fahrbahn und Offsetdrift und Beschleunigungsempfindlichkeit dieser Drehratensensoren. Langsame Drehungen sind so kaum erfassbar. Zudem sind die Kosten solcher Drehratensensoren nicht unerheblich.

Aus diesem Grunde wurden bspw. in der DE 10 2008 040 295 A1, insbesondere auch zur Auslösung eines Notrufs (E-Call), Verfahren zum Erkennen eines Überschlags auf Basis eines Signals eines Beschleunigungssensors entwickelt, welche im Zweifel ohne Drehratensensoren auskommen. Dabei wird die Beschleunigung in Richtung Hochachse des Fahrzeugs bewertet und insbesondere die Dauer bewertet, in welcher die Beschleunigung innerhalb eines vorgegebenen Bereichs liegt. Durch eine Dach- oder extreme Schräglage des Fahrzeugs verändert sich nämlich der Einfluss der Schwerkraft auf den Beschleunigungssensor in Hochachse maßgeblich.

Die Aufgabe der vorliegenden Erfindung ist es, ein entsprechendes Verfahren weiterzuentwickeln, so dass eine kostengünstige Bewertung eines Überschlags möglich ist.

Diese Aufgabe wird durch die Merkmale der unabhängigen Ansprüche gelöst. Vorteilhafte Weiterbildungen der Erfindung ergeben sich aus den Unteransprüchen, wobei auch Kombinationen und Weiterbildungen einzelner Merkmale miteinander denkbar sind.

Ein wesentlicher Gedanke der Erfindung besteht darin, dass ein Zähler und ein Taktgeber vorgesehen sind, je Takt der Zähler erhöht wird, sofern die Beschleunigung innerhalb eines vorgegebenen Bereichs liegt und der Zähler je Takt um Eins erniedrigt wird, sofern die Beschleunigung außerhalb eines vorgegebenen Bereichs liegt und zwar bis maximal den Wert Null, welcher auch dem Ausgangswert entspricht.

Der vorgegebene Bereich ist dabei fahrzeug- und anwendungsabhängig adaptierbar, soll aber einer weitgehenden Dachlage des Fahrzeugs entsprechen, also bei einem Beschleunigungssensor in Hochachse zum Boden hin gerichtet bspw. ab einem Schwerkraftverlust von betragsmäßig 0,7 g, d.h. bei einem auf -1g normierten Grundwert für ein aufrecht stehendes Fahrzeug als Überschlag ab -0,3 g bis zumindest +1g reichen, wobei g die Erdanziehungskraft ist.

Ein Notruf wird vorzugsweise ausgelöst, wenn ein vorgegebener Zählerstand erreicht wird. Ein solches Verfahren hat im Gegensatz zu rein zeitlichen Bewertungen den Vorteil, dass vereinzelte Messwertfehler jeweils als Einzelfehler nur zu einem um Eins fehlerhaften Zählerstandwert führen, bei entsprechend von 1 deutlich abweichenden Zählergröße, vorzugsweise mindestens 10, aber keinen entscheidenden Einfluss auf die Gesamtbewertung haben.

In einer bevorzugten Weiterbildung wird zudem der Zähler nur erhöht, wenn die Geschwindigkeit des Fahrzeugs in Fahrtrichtung kleiner ist als eine vorgegebene Höchstgeschwindigkeit. Damit erfasst dieses Verfahren nur Überschläge, die außerhalb normalen Fahrbetriebs auftreten. Für eine Notruffunktion ist dies jedoch völlig ausreichend.

Alternativ kann vorgesehen sein, dass zwar der Zähler erhöht, ein Notruf aber nur ausgelöst wird, wenn die Geschwindigkeit des Fahrzeugs in Fahrtrichtung kleiner ist als eine vorgegebene Höchstgeschwindigkeit.

Als Höchstgeschwindigkeit ist ein Wert von unter 40 km/h, vorzugsweise unter oder gleich 15 km/h vorgesehen, wobei diese Werte nur erste Erfahrungswerte und entsprechend der jeweiligen Fahrzeugapplikation anpassbar sind.

Als Zählerstand für die Auslösung eines Notrufs ist ein Wert hinterlegt, welcher frühestens erreicht wird, wenn die Beschleunigung bspw. 500 Millisekunden bis 4 Sekunden lang ununterbrochen innerhalb des vorgegebenen Bereichs liegt. Sind Zwischenwerte abweichend, kommt es aber eben nicht zu einem kompletten Rücksetzung, sondern einer inkrementellen Reduzierung des Zählers und damit einer Auslösung nach entsprechend längerer Zeitdauer. Auch dieser Zählerendwert ist adaptierbar.

Ein solcher Zähler wird vorzugsweise rein als Software in einem Steuergerät für ein Kraftfahrzeug realisiert, also ein entsprechender Algorithmus im Speicher gespeichert und während des Betriebs geladen.

## Patentansprüche

1. Verfahren zum Erkennen eines Überschlags auf Basis eines Signals eines Beschleunigungssensors in Richtung Hochachse des Fahrzeugs anhand der Dauer, in welcher die Beschleunigung innerhalb eines vorgegebenen Bereichs liegt, **dadurch gekennzeichnet, dass**
ein Zähler und ein Taktgeber vorgesehen sind, je Takt der Zähler erhöht wird, sofern die Beschleunigung innerhalb eines vorgegebenen Bereichs liegt und der Zähler bis maximal den Wert Null erniedrigt wird, sofern die Beschleunigung außerhalb eines vorgegebenen Bereichs liegt.

2. Verfahren nach Anspruch 1, **dadurch gekennzeichnet, dass** ein Notruf ausgelöst wird, wenn ein vorgegebener Zählerstand erreicht wird.

3. Verfahren nach Anspruch 1 oder 2, **dadurch gekennzeichnet, dass** der Zähler nur erhöht wird, wenn die Geschwindigkeit des Fahrzeugs in Fahrtrichtung kleiner ist als eine vorgegebene Höchstgeschwindigkeit.

4. Verfahren nach einem der vorangehenden Ansprüche, **dadurch gekennzeichnet, dass** ein Notruf nur ausgelöst wird, wenn die Geschwindigkeit des Fahrzeugs in Fahrtrichtung kleiner ist als eine vorgegebene Höchstgeschwindigkeit.

5. Verfahren nach einem der vorangehenden Ansprüche, **dadurch gekennzeichnet, dass** als Höchstgeschwindigkeit ein Wert von unter 40 km/h, vorzugsweise unter 15 km/h vorgesehen ist.

6. Verfahren nach einem der vorangehenden Ansprüche, **dadurch gekennzeichnet, dass** als Zählerstand für die Auslösung eines Notrufs ein Wert hinterlegt wird, welcher frühestens erreicht wird, wenn die Beschleunigung für zumindest 500 Millisekunden lang ununterbrochen innerhalb des vorgegebenen Bereichs liegt.

7. Steuergerät für ein Kraftfahrzeug mit einem Algorithmus zur Durchführung des Verfahrens nach einem der vorangehenden Ansprüche.

## Claims

1. A method for detecting a rollover based on a signal of an acceleration sensor in the vertical axis direction of the vehicle using the duration during which the acceleration lies within a predetermined range, **characterized in that**
a counter and an impulse generator are provided, the counter is increased per impulse as long as the acceleration lies within a predetermined range, and the counter is decreased to a maximum value of zero as long as the acceleration lies outside of a predetermined range.

2. The method according to Claim 1, **characterized in that** an emergency call is triggered when a predetermined counter value is reached.

3. The method according to Claim 1 or 2, **characterized in that** the counter is increased only when the speed of the vehicle in driving direction is less than a predetermined maximum speed.

4. The method according to any one of the preceding claims, **characterized in that** an emergency call is triggered only when the speed of the vehicle in driving direction is less than a predetermined maximum speed.

5. The method according to any one of the preceding claims, **characterized in that** a value of less than 40 km/h, preferably less than 15 km/h, is provided as maximum speed.

6. The method according to any one of the preceding claims, **characterized in that** a value which is reached at the earliest when the acceleration remains uninterruptedly within the predetermined range for at least 500 milliseconds is stored as counter value for the triggering of an emergency call.

7. A control device for a motor vehicle with an algorithm for implementing the method according to any one of the preceding claims.

## Revendications

1. Procédé permettant d'identifier un capotage sur la base d'un signal d'un accéléromètre en direction de l'axe de lacet du véhicule à l'aide de la durée pendant laquelle l'accélération se situe à l'intérieur d'une plage prédéfinie, **caractérisé en ce**
**qu'**un compteur et un générateur d'impulsions sont prévus, que le compteur progresse à chaque impulsion, tant que l'accélération se trouve à l'intérieur d'une plage prédéfinie et que le compteur régresse au maximum jusqu'à la valeur zéro, tant que l'accélération se trouve en dehors d'une plage prédéfinie.

2. Procédé selon la revendication 1, **caractérisé en ce qu'**un appel d'urgence est déclenché lorsqu'un niveau de compteur prédéfini est atteint.

3. Procédé selon la revendication 1 ou 2, **caractérisé en ce que** le compteur ne progresse que si la vitesse du véhicule dans le sens de déplacement est plus petite qu'une vitesse maximale prédéfinie.

4. Procédé selon l'une quelconque des revendications précédentes, **caractérisé en ce qu'**un appel d'urgence n'est déclenché que si la vitesse du véhicule dans le sens de déplacement est plus petite qu'une vitesse maximale prédéfinie.

5. Procédé selon l'une quelconque des revendications précédentes, **caractérisé en ce qu'**une valeur inférieure à 40 km/h, de préférence inférieure à 15 km/h est prévue comme vitesse maximale.

6. Procédé selon l'une quelconque des revendications précédentes, **caractérisé en ce qu'**une valeur est enregistrée comme niveau de compteur déclenchant un appel d'urgence, laquelle est atteinte au plus tôt lorsque l'accélération se situe à l'intérieur de la plage prédéfinie pendant une durée ininterrompue d'au moins 500 millisecondes.

7. Appareil de commande d'un véhicule doté d'un algorithme pour exécuter le procédé selon l'une quelconque des revendications précédentes.
